# EUROPEAN PATENT APPLICATION

(11) **EP 4 408 098 A1**
(43) Date of publication of application: **31.07.2024**
(21) Application number: 22872097.5
(22) Date of filing: 23.09.2022
(51) Int. Cl.: H04W 72/04

(54) **REFERENCE SIGNAL TRANSMISSION METHOD AND APPARATUS, AND RELATED DEVICE**

(30) Priority: 24.09.2021 CN 202111124386
(71) Applicant: Vivo Mobile Communication Co., Ltd., Dongguan, Guangdong 523863 (CN)
(72) Inventor: PENG, Shuyan, Dongguan, Guangdong 523863 (CN); WANG, Yuanyuan, Dongguan, Guangdong 523863 (CN); JI, Zichao, Dongguan, Guangdong 523863 (CN)
(74) Representative: Lavoix
(86) International application number: PCT/CN2022/120788
(87) International publication number: WO 2023/046053

(57) **Abstract**

This application discloses a method and an apparatus for transmitting a reference signal, and a related device, and belongs to the field of communication technologies. The method includes: determining, by a terminal, a target transmission resource for transmitting a sidelink SL reference signal, where the SL reference signal includes a reference signal for positioning; and transmitting, by the terminal, the SL reference signal through the target transmission resource.

## Description

### CROSS-REFERENCE TO RELATED APPLICATIONS

This application claims priority to Chinese Patent Application No. 202111124386.3, filed in China on September 24, 2021, which is incorporated by reference in its entirety.

### TECHNICAL FIELD

This application relates to the field of communication technologies, and specifically, to a method and an apparatus for transmitting a reference signal, and a related device.

### BACKGROUND

A long term evolution (Long Term Evolution, LTE) system supports sidelink (sidelink, abbreviated as SL) transmission, in other words, data transmission between terminals is directly performed on physical layers. An LTE sidelink performs communication based on broadcast. Although the LTE sidelink can be used for supporting basic security communication of vehicle to everything (vehicle to everything, V2X), the LTE sidelink is not suitable for other more advanced V2X services. A 5G new radio (New Radio, NR) system supports a more advanced sidelink transmission design such as unicast, multicast, or groupcast, thereby supporting more comprehensive service types.

Currently, when positioning is performed on an SL, resource allocation of reference signals for positioning needs to be considered, to meet a positioning accuracy requirement of positioning using an SL reference signal.

### SUMMARY

Embodiments of this application provide a method and an apparatus for transmitting a reference signal, and a related device, which can resolve a positioning accuracy problem of positioning using an SL reference signal.

According to a first aspect, a method for transmitting a reference signal is provided, including:
determining, by a terminal, a target transmission resource for transmitting a sidelink SL reference signal, where the SL reference signal includes a reference signal for positioning; and
transmitting, by the terminal, the SL reference signal through the target transmission resource.

According to a second aspect, an apparatus for transmitting a reference signal is provided, including:
a determining module, configured to determine a target transmission resource for transmitting a sidelink SL reference signal, where the SL reference signal includes a reference signal for positioning; and
a transmission module, configured to transmit the SL reference signal through the target transmission resource.

According to a third aspect, a terminal is provided, including a processor, a memory, and a program or instructions stored in the memory and runnable on the processor, the program or the instructions, when executed by the processor, implementing steps of the method for transmitting a reference signal according to the first aspect.

According to a fourth aspect, a readable storage medium is provided, storing a program or instructions, the program or the instructions, when executed by a processor, implementing steps of the method for transmitting a reference signal according to the first aspect.

According to a fifth aspect, a chip is provided, including a processor and a communication interface, where the communication interface is coupled to the processor, and the processor is configured to run a program or instructions of a network side device, to implement the method for transmitting a reference signal according to the first aspect.

According to a sixth aspect, a communication device is provided, configured to implement method for transmitting a reference signal according to first aspect.

In the embodiments of this application, a terminal determines a target transmission resource for transmitting a sidelink SL reference signal; and the terminal transmits the SL reference signal through the target transmission resource, to meet a requirement of positioning using the SL reference signal.

### BRIEF DESCRIPTION OF THE DRAWINGS

FIG. 1 is a structural diagram of a network system according to an embodiment of this application;
FIG. 2 is a flowchart of a method for transmitting a reference signal according to an embodiment of this application;
FIG. 3 is a timing diagram of a terminal sending a reference signal according to an embodiment of this application;
FIG. 4 is a structural diagram of an apparatus for transmitting a reference signal according to an embodiment of this application;
FIG. 5 is a structural diagram of a communication device according to an embodiment of this application; and
FIG. 6 is a structural diagram of a terminal according to an embodiment of this application.

### DETAILED DESCRIPTION

The following clearly describes the technical solutions in the embodiments of this application with reference to the accompanying drawings in the embodiments of this application. Apparently, the described embodiments are some embodiments of this application rather than all of the embodiments. All other embodiments obtained by a person of ordinary skill in the art based on the embodiments of this application fall within the protection scope of this application.

The specification and claims of this application, and terms "first" and "second" are used to distinguish similar objects, but are unnecessarily used to describe a specific sequence or order. It should be understood that the data in such a way are interchangeable in proper circumstances, so that the embodiments of this application can be implemented in other orders than the order illustrated or described herein. Objects distinguished by "first" and "second" are usually one type, and the quantity of objects is not limited. For example, the first object may be one or more than one. In addition, in the specification and the claims, "and/or" means at least one of the connected objects, and the character "/" generally indicates an "or" relationship between the associated objects. In this application, 'transmission' means transmission of signals, not sending of signals in a narrow sense.

It should be noted that, the technologies described in the embodiments of this application are not limited to a long term evolution (Long Term Evolution, LTE) system or an LTE-advanced (LTE-Advanced, LTE-A) system, and can also be used in other wireless communication systems, such as, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), and single-carrier frequency-division multiple access (Single-carrier Frequency-Division Multiple Access, SC-FDMA). The terms "system" and "network" in the embodiments of this application are often used interchangeably, and the described technology can be used not only for the above systems and radio technologies, but also for other systems and radio technologies. However, the following description describes a new radio (New Radio, NR) system for example objectives, and NR terms are used in most of the description below, although these technologies are also applicable to applications other than NR system applications, such as a 6^{th} generation (6^{th} Generation, 6G) communication system.

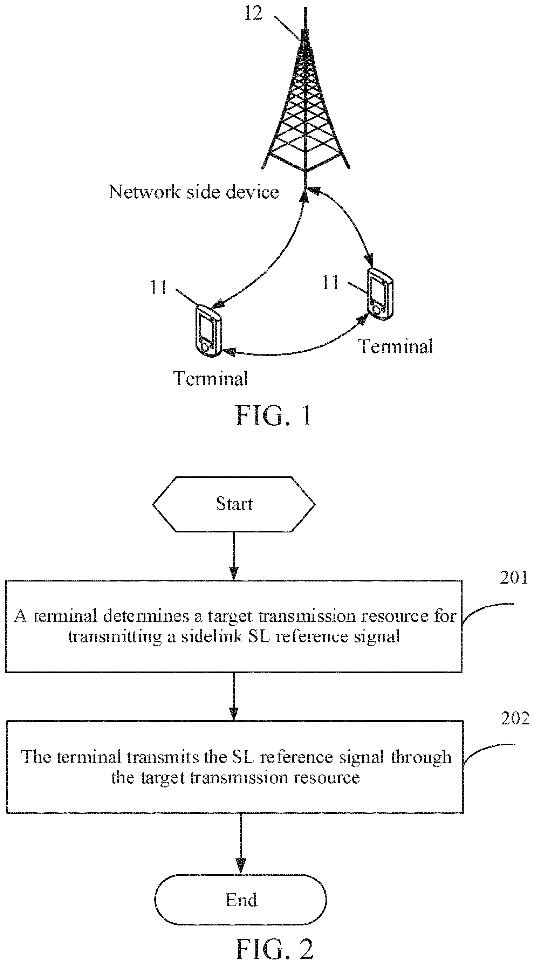

FIG. 1 is a structural diagram of a wireless communication system to which the embodiments of this application are applicable. The wireless communication system includes a terminal 11 and a network side device 12. The terminal 11 may also be referred to as a terminal or a user terminal (User Equipment, UE). The terminal 11 may be a terminal side device such as a mobile phone, a tablet computer (Tablet Computer), a laptop computer (Laptop Computer) or referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), a wearable device (Wearable Device) or in-vehicle equipment (VUE), or a pedestrian terminal (PUE). The wearable device includes: a bracelet, a headphone, glasses, or the like. It should be noted that, a specific type of the terminal 11 is not limited in the embodiments of this application. The network side device 12 may be a base station or a core network, where the base station may be referred to as a NodeB, an evolved nodeB, an access point, a base transceiver station (Base Transceiver Station, BTS), a radio base station, a radio transceiver, a basic service set (Basic Service Set, BSS), an extended service set (Extended Service Set, ESS), a nodeB, an evolved nodeB (eNB), a home nodeB, a home evolved nodeB, a WLAN access point, a WiFi node, a transmitting receiving point (Transmitting Receiving Point, TRP), or another appropriate term in the field, as long as the same technical effect is achieved. The base station is not limited to a specific technical term. It should be noted that, a base station in the NR system is used as an example in the embodiments of this application, but a specific type of the base station is not limited.

A method for transmitting a reference signal provided in the embodiments of this application is described below through specific embodiments and application scenarios thereof with reference to the accompanying drawings.

FIG. 2 is a flowchart of a method for transmitting a reference signal according to an embodiment of this application. The method for transmitting a reference signal includes the following steps.

Step 201: A terminal determines a target transmission resource for transmitting a sidelink (SideLink, SL) reference signal, where the SL reference signal includes a reference signal for positioning.

The SL reference signal may include: SL positioning reference signals (Positioning Reference Signals, PRSs) and other SL reference signals. The other SL reference signals are extended for positioning, for example, an SL synchronization signal block (SL Synchronization Signal Block, S-SSB), an SL channel state information reference signal (CSI reference signals, CSI-RS), an SL phase-tracking reference signal (Phase-tracking reference signal, PTRS), or an SL demodulation reference signal (Demodulation Reference Signal, DMRS). The SL reference signal in this application refers to a reference signal used for positioning, and does not only refer to an SL PRS. The SL PRS appearing in the following description is only used for illustration and is not limited to only the SL PRS. For solutions applicable to the SL PRS, other SL reference signals for positioning are all applicable.

The target transmission resource may include a candidate resource or a reserved resource.

Step 202: The terminal transmits the SL reference signal through the target transmission resource. The transmission of the SL reference signal may include sending or receiving the SL reference signal.

In this embodiment, the terminal determines the target transmission resource for transmitting the sidelink reference signal, and transmits the SL reference signal through the target transmission resource, to meet a requirement of positioning using the SL reference signal.

In the foregoing description, the target transmission resource includes at least one of the following:
a resource predefined in a protocol;
a resource configured by a network side device;
a resource configured by the terminal or another terminal;
a resource indicated by the network side device;
a resource indicated by the terminal or the another terminal;
a resource determined according to a first mapping relationship between a first resource and a reserved resource;
a resource determined according to a second mapping relationship between the first resource and a candidate resource;
a resource determined according to a rule predefined in the protocol;
a resource determined according to a rule configured by the network side device;
a resource determined according to a rule configured by the terminal or the another terminal; and
a resource determined according to a rule indicated by the network side device, where
the first resource includes at least one of the following:
the first resource includes a resource of a physical sidelink shared channel (Physical Sidelink Share Channel, PSSCH);
a resource of a physical sidelink control channel (Physical Sidelink Control Channel, PSCCH);
a candidate resource of the PSCCH;
a candidate resource of the PSSCH;
a resource of a physical sidelink feedback channel (Physical sidelink Feedback Channel, PSFCH);
a candidate resource of the PSFCH;
a resource of a physical sidelink broadcast channel PSBCH;
a resource of a DMRS;
resource by a CSI-RS; and
a resource of a PTRS.

It should be noted that, "configured by the terminal" in this application may be understood as "configured by the terminal or another terminal", and descriptions that only "configured by the terminal" appears in (for example, the resource configured by the terminal) each may be understood as "configured by the terminal or another terminal". In other words, configured by the terminal or indicated by the terminal in this embodiment of this application is not limited to configured or indicated by the terminal, and may alternatively be configured or indicated by another terminal.

The SL reference signal may be configured or indicated as periodic, semi-static, or aperiodic transmission. Correspondingly, the target transmission resource for transmitting the SL reference signal is a periodic resource, or a semi-static resource, or an aperiodic resource.

In the foregoing description, if the SL reference signal is configured or indicated as periodic transmission, a periodicity value for periodic transmission is configured or indicated; if the SL reference signal is configured or indicated as semi-static transmission, downlink control information (Downlink Control Information, DCI) or sidelink control information (Sidelink Control Information, SCI) triggers a configured resource to be enabled or disabled; or if the SL reference signal is configured or indicated as aperiodic transmission, a location of the SL reference signal is preconfigured or configured.

An SL reference signal resource configured by the terminal or the another terminal (for example, configured through PC5-RRC) may override an SL reference signal resource configured by the network side device (for example, configured through radio resource control (Radio Resource Control, RRC) signaling).

If the target transmission resource is the candidate resource of the SL reference signal, further, the terminal may select, from the candidate resource, a resource as a transmission resource for the SL reference signal.

In an embodiment of this application, a target transmission resource configured by the terminal or the another terminal overrides a target transmission resource configured by the network side device;
and/or, a target transmission resource indicated through a medium access control control element (Medium Access Control, MAC) control element (Control Element, CE) by the network side device, through DCI, or through SCI sent by the terminal overrides a target transmission resource configured through RRC.

Specifically, the MAC CE, the DCI, and the SCI may dynamically indicate the resource for transmitting the SL reference signal, that is, indicate the target transmission resource, where the target transmission resource indicated through the MAC CE by the network side device, through the DCI, or through the SCI sent by the terminal overrides the target transmission resource configured through the RRC.

In an embodiment of this application, the network side device configures at least one pattern of the target transmission resource for the terminal, a target pattern of the target transmission resource is indicated through a MAC CE sent by the network side device, indicated through DCI sent by the network side device, or indicated through SCI sent by the terminal, and the target pattern is a pattern in the at least one pattern.

For example, the network side device preconfigures or configures one or more patterns (for example, N patterns) of an SL PRS resource that can be used by the terminal, and the MAC CE, the DCI, or the SCI indicates an SL PRS resource pattern used by UE. (Available PRS patterns are configured through RRC, and specific patterns are dynamically indicated.)

If a number N of preconfigured or configured SL PRS resource patterns is equal to 1, a field value in the DCI or the SCI is 0.

If the number N of preconfigured or configured SL PRS resource patterns is greater than 1, the field value in the DCI or the SCI is log2(N) bits.

In an embodiment of this application, in a case that there is the first mapping relationship between the first resource and the reserved resource or there is the second mapping relationship between the first resource and the candidate resource, the target transmission resource is determined according to predefining and/or sensing.

The first mapping relationship and the second mapping relationship may be determined through predefining, preconfiguring, and configuring.

For example, a mapping relationship between an SL PRS resource and a reserved resource of the PSFCH is predefined. The SL PRS is located on a symbol that the PSFCH is on, and mapping is started from next PRB of a highest PRB of the PSFCH, or mapping is started from next subchannel of a subchannel that the highest PRB of the PSFCH is in.

For example, a mapping relationship between the SL PRS resource and a reserved resource of the PSSCH/PSCCH is preconfigured. The SL PRS is located after at least N1 symbols after the PSSCH/PSCCH, and a frequency domain resource of the SL PRS is the same as a frequency domain resource of the PSSCH/PSCCH.

In an embodiment of this application, in a case that the first resource includes the resource of the PSSCH and/or the resource of the PSCCH, or the first resource includes the candidate resource of the PSSCH and/or the candidate resource of the PSCCH, the target transmission resource is determined according to at least one of sensing, the first mapping relationship, and the second mapping relationship.

For example, the UE determines a resource location of the SL PRS according to a resource location of the PSSCH/PSCCH determined through sensing and the mapping relationship between the SL PRS resource and the reserved resource of the PSSCH/PSCCH; or

the UE determines a resource location of the SL PRS according to sensing information, a determined resource location of the PSFCH, and the mapping relationship between the SL PRS resource and the reserved resource of the PSFCH.

In an embodiment of this application, the target transmission resource meets at least one of the following:
a lowest subchannel of the target transmission resource is a start location of the SL reference signal;
a lowest physical resource block (Physical resource block, PRB) corresponding to the lowest subchannel of the target transmission resource is the start location of the SL reference signal;
a highest subchannel of the target transmission resource is an end location of the SL reference signal; and
a highest PRB corresponding to the highest subchannel of the target transmission resource is the end location of the SL reference signal.

For example, in a case that there is a mapping relationship between time domain and/or frequency domain of the candidate resource and the PSFCH, a lowest subchannel (subchannel) of the PSFCH of the candidate resource may be selected as the start location of the SL reference signal, or a lowest PRB corresponding to the lowest subchannel of the candidate resource may be selected as the start location of the SL reference signal, or a highest subchannel of the candidate resource may be selected as the end location of the SL reference signal, or a highest PRB corresponding to the highest subchannel of the candidate resource may be selected as the end location of the SL reference signal.

In an embodiment of this application, in a case that the SL reference signal is configured, a PSFCH is enabled. Further, a time domain location of the enabled PSFCH is a candidate resource time domain location of the target transmission resource.

For example, if the SL reference signal is configured, configuring for the PSFCH is enabled in a resource pool. (This may also directly depend on a network configuration.) When a PRS is configured, a time domain location for enabling the configuring for the PSFCH in the resource pool is a candidate resource time domain location of the PRS. Optionally, the configuring for the PSFCH is enabled, but transmission of the PSFCH is not enabled. It should be noted that, in this case, a time domain resource location of the PSFCH is used for transmission of the SL reference signal rather than the transmission of the PSFCH. A time domain resource unit in this application may be a symbol, a slot, a subframe, ms, s, or the like. For different cases, time domain units may be different, which is not limited in this application.

The PSFCH is configured in the resource pool, but a bandwidth of the SL reference signal is not limited in the resource pool. This emphasizes that the SL reference signal is in a time domain resource unit of the PSFCH.

In an embodiment of this application, the target transmission resource is determined according to at least one of the following:
a periodicity value of an SL reference signal resource;
a time interval of the SL reference signal resource;
a number of times of transmission of the SL reference signal;
an index of the SL reference signal;
a sensing or measuring window of the SL reference signal;
a frequency domain resource bandwidth of the SL reference signal;
a resource pool identifier;
a repetition factor;
an identifier parameter;
a priority of the SL reference signal;
a cyclic shift; and
transmit power.

Specifically, one or more periodicity values are predefined, preconfigured, configured, or indicated. If the periodicity value is obtained according to SCI, a periodicity in a sidelink control information (Sidelink control information, SCI) format 1-A or a periodicity value of data may be read as a periodicity of the PRS, or the SCI independently indicates a periodicity value of the PRS, which is not limited thereto.

Optionally, if the periodicity value is 0, UE transmits the SL reference signal according to a time domain and/or frequency domain indication (TRI), in other words, the UE transmits the SL reference signal in an aperiodic transmission manner. In other words, in a case that the periodicity value of the SL reference signal resource is 0, the SL reference signal resource is determined according to a time domain indication and/or a frequency domain indication, or transmission of the SL reference signal resource is aperiodic transmission.

In the foregoing description, the periodicity value of the SL reference signal resource is determined according to at least one of the following:
the priority of the SL reference signal;
quality of service (Quality of Service, QoS);
a delay;
a channel busy ratio (Channel Busy Ratio, CBR);
a channel occupancy ratio (Channel Occupancy Ratio, CR);
reference signal received power (Reference Signal Received Power, RSRP); and
a reference signal strength indicator (Reference Signal Strength Indicator, RSSI).

The periodicity value of the SL reference signal resource is related to the priority of the SL reference signal, the QoS, the delay, the CBR, the CR, the RSRP, and the like.

For example, if the CBR is greater than a CBR threshold, the periodicity value is a first periodicity; and if the CBR is less than the CBR threshold, the periodicity value is a second periodicity. (A more congested resource pool indicates that the resource allocated to the SL reference signal may be appropriately reduced, and an SL reference signal periodicity increases.)

If the delay is greater than or equal to a delay threshold, the periodicity value is the first periodicity; and if the delay is less than the delay threshold, the periodicity value is the second periodicity. (A shorter delay indicates that the resource needs to be sent as soon as possible, so that a sending periodicity is shorter.)

If the priority is less than or equal to a priority threshold, the periodicity value is the first periodicity; and if the priority is greater than the priority threshold, the periodicity value is the second periodicity.

It should be noted that, the periodicity value defined above may refer to a periodicity value of one PRS resource (PRS resource), or may refer to a periodicity value of a PRS resource set (PRS resource set).

In the foregoing description, the time interval of the SL reference signal resource meets at least one of the following:
the time interval is an interval from a previously reserved SL reference signal resource; and
the time interval is an interval between a reserved SL reference signal resource and an SL reference signal resource sent for the first time.

For example, the time interval is the interval from the previously reserved SL reference signal resource, that is, a time interval from previous SL reference signal sending. For example, UE 1 sends a PRS 1 and a PRS 2, where the PRS 1 is sent twice; and the PRS 2 is sent twice. Sending timing of the UE 1 is sequentially: a first PRS 1, a first PRS 2, a second PRS 1, and a second PRS 2.

A previously reserved SL PRS resource is a resource for transmitting a same SL PRS (that is, a repetition interval, which is a same PRS by using UE as a unit) as an SL PRS resource. For example, the first PRS 1 and the second PRS 1 is a same SL PRS, or the first PRS 2 and the second PRS 2 are a same SL PRS. Alternatively, the previously reserved SL PRS resource is a resource used by the UE to previously transmit an SL PRS (differentiated by using UE as a unit, and may be a same PRS or a different PRS, without limitation). For example, for an interval between a resource for sending the first PRS 1 and a resource for sending the first PRS 2, it is not limited whether the PRSs sent by the two resources are the same.

The time interval is an interval between a reserved SL PRS resource and an SL PRS resource sent for the first time, that is, a time unit for an initial SL PRS to send SCI. A reserved SL PRS and an SL PRS sent for the first time are a same SL PRS (that is, repetition) or different SL PRSs, which are not limited thereto. For example, an interval between the first PRS 1 and the first PRS 2, an interval between the first PRS 1 and the second PRS 1, and an interval between the first PRS 1 and the second PRS 2.

The target transmission resource may be determined according to the number of times of transmission or the index of the SL reference signal. For example, the UE excludes a corresponding resource according to the index of the SL reference signal. For example, if SL PRS resource reservation indicates that three resources are reserved for an SL PRS, and an SL PRS index indicates second reservation, in a periodicity, the UE excludes, according to a field value, a time domain resource that the SL PRS is in and an SL PRS resource corresponding to next interval of the SL PRS; and when excluding a periodic resource, the UE excludes, according to the field value, a periodic resource corresponding to the SL PRS, a periodic resource corresponding to the SL PRS resource of the next interval of the SL PRS, and a periodic resource corresponding to an SL PRS resource of a previous interval of the SL PRS.

In the foregoing description, a size of an indication field indicated by the MAC CE/DCI/SCI is log2(N)bits, where N is a predefined, preconfigured, or configured value.

In the foregoing description, a parameter of the sensing or measuring window of the SL reference signal includes at least one of the following:
a length;
a size;
a start location;
an end location;
a periodicity of the window;
an interval of the window;
a priority of the window (if a capability of the UE is limited, an SL PRS in a window may be determined and sensed based on a priority); and
a priority indication of data (indicating a priority rule in the window), for example, SL data (data) is indicated as preferred, the SL PRS is indicated as preferred, the SL PRS is indicated as preferred than an SL signal (signal) or an SL channel (channel) in a slot, or the SL PRS is indicated as preferred than an SL signal or an SL channel in a symbol (symbol) of the SL PRS.

To limit a sensing or measuring location of the SL PRS for the sensing or measuring window of the SL reference signal, in the foregoing configurations, only a configuration falling within the window is sensed or measured.

In the foregoing description, the frequency domain resource bandwidth of the SL reference signal meets at least one of the following:
the frequency domain resource bandwidth is the same as an SL bandwidth part BWP;
the frequency domain resource bandwidth is the same as an SL resource pool bandwidth;
the frequency domain resource bandwidth is within a bandwidth of SL data or an SL PSSCH;
the frequency domain resource bandwidth is the same as the bandwidth of the SL data or the SL PSSCH; and
the frequency domain resource bandwidth is indicated by using a PRB or a subchannel as a granularity.

The target transmission resource may be determined according to the resource pool identifier. If the target transmission resource is limited in a resource pool range, it may be similar to that sending of data of TX (sending) UE is limited in the resource pool range, which is equivalent to a TX resource pool. If the UE receives information, the UE determines a corresponding time domain or frequency domain resource range according to a configuration in the SL resource pool and the resource pool ID.

The target transmission resource may be determined according to the repetition factor. The repetition factor may be a number of times of repeated transmission of the SL PRS, or a number of reserved resources.

The target transmission resource may be determined according to the identifier parameter (ID parameter). The ID parameter includes at least one of the following: (selection may be performed through a modulo operation based on the ID, or selection may be performed based on sensing (sensing) and the ID)
determined according to a UE ID;
determined according to a source identifier (source ID);
determined according to a destination identifier (destination ID);
determined according to a group identifier (group ID);
determined according to a member identifier (member ID); and
determined according to a zone identifier (zone ID).

The group identifier includes two types: the group ID, indicating a group number of a group; and the member ID, indicating a member ID number in the group, to identify numbers of different UE in the group ID.

In the foregoing description, the priority of the SL reference signal meets at least one of the following:
the priority is a value that is predefined in a protocol, preconfigured, configured, or indicated;
the priority is related to a priority of an upper-layer service or a positioning service (for example, the priority is the same as the priority of the upper-layer service or the positioning service);
the priority is determined according to a priority of a to-be-transmitted data packet, a priority of an SL process, a priority of a hybrid automatic repeat request (Hybrid Automatic Repeat reQuest, HARQ) process, or a priority of a MAC protocol data unit (Protocol Data Unit, PDU) (which is applicable to a case in which the SL reference signal is transmitted together with a data packet); and
the priority is determined according to a priority offset, where the priority offset is a value that is predefined in a protocol, preconfigured, configured, or indicated, for example, the priority of the to-be-transmitted data packet plus or minus the offset.

In an embodiment of this application, the target transmission resource is determined according to a sensing result, and when a resource determined through the sensing result meets a first condition, the resource determined through the sensing result is excluded, where the first condition includes at least one of the following:
an SL reference signal resource indicated or reserved by SCI;
a resource whose RSRP is greater than or equal to an RSRP threshold;
a reference signal resource whose resource overlapping degree with an occupied reference signal resource in a time domain unit meets a preset condition. The overlapping degree may include at least one of an overlapping size and an overlapping ratio.

Specifically, the UE performs sensing in a preset resource or resource pool, and when a resource meets at least one of the following conditions, the resource is excluded:
(1) An SL reference signal resource indicated or reserved by SCI.

Optionally, when the UE senses an SL PRS resource, the resource is excluded.

An SL PRS may be determined according to the SCI.

(2) SL PRS RSRP measured by the UE is greater than or equal to an RSRP threshold, where the RSRP threshold is determined according to at least one of the following:
(21) The RSRP threshold is a value that is predefined in a protocol, preconfigured, configured, or indicated.

For example, a priority value of the SL PRS is predefined as 1.

(22) The RSRP threshold is a value determined according to a priority mapping rule.
a) The RSRP threshold is determined according to a priority of an SL PRS to-be-sent by the UE and a priority of an SL PRS received by the UE, and a mapping rule.
b) The RSRP threshold is determined according to an SL priority of a data packet to-be-sent by the UE and a priority of an SL data packet received by the UE, and a mapping rule. (In this case, it is considered that the SL PRS and the data packet are simultaneously sent, and the priorities are not independently configured, but the priority of the data packet is taken.)
c) The RSRP threshold is determined according to the SL priority of the data packet to-be-sent by the UE plus a priority offset of the SL PRS.

The priority offset may be an integer.

Based on the SL priority value minus a positive offset indicating the priority of the SL PRS, the priority of the SL PRS is greater than the SL priority. In an SL, a smaller priority value indicates a higher priority.

(23) The RSRP threshold is a value determined according to a data priority and an RSRP offset (offset).

A first RSRP threshold is determined according to SL data, and the RSRP threshold is the first RSRP threshold plus the RSRP offset.

The RSRP offset is a predefined, preconfigured, configured, or indicated value.

(24) The RSRP offset or the priority offset is related to the CR, the CBR, a number of ACKs, a number of NACKs, or the like.

(3) Occupied PRS resources are excluded, and selection is performed from remaining available PRS resources. (Whether to exclude a resource is considered based on an overlapping degree.)

31) A resource in a corresponding time domain unit is excluded.

When overlapping resources in the corresponding time domain unit are greater than a preset value or a preset ratio, an entire frequency domain resource in the corresponding time domain unit is excluded. The preset value or the preset ratio is a predefined, preconfigured, or configured parameter.

When remaining resources in the corresponding time domain unit do not meet QoS of a to-be-transmitted SL PRS, or a required resource element (Resource Element, RE) or PRB, an entire resource in the corresponding time domain unit is excluded.

(32) An overlapping resource (an RE or a PRB or the like) in a corresponding time domain unit is excluded. Optionally, remaining frequency domain resources in the time domain unit are optional.

For example, UE 1 needs to send an SL PRS 1. If an SL PRS 2 sent by another UE (e.g. UE 2) is sensed, the UE 1 senses and determines how many resources (REs/RBs/subchannels) remain in a time domain resource that the PRS 2 is in. If the resources are greater than a specified value, the UE 1 excludes the entire time domain resource; otherwise, resources occupied by the PRS 2 are excluded, and remaining resource are used as a reserved resource or a candidate resource of the PRS 1.

In an embodiment of this application, the target transmission resource is determined according to a sensing result, and if a resource determined through the sensing result meets a second condition, the resource determined through the sensing result is selected, where the second condition includes at least one of the following:
a resource whose RSRP of the SL reference signal measured by the UE is less than or equal to an RSRP threshold;
a resource that is not reserved by DCI or SCI and that is in a time domain unit; and
a resource of a remaining resource element RE, PRB, or subchannel in a time domain unit that a resource reserved by the DCI or the SCI is in. When the resource or a resource ratio reserved by the DCI or the SCI is less than a preset value or a preset ratio, the method may be used. The preset value or the preset ratio is a predefined, preconfigured, or configured value.

The UE performs sensing in a preset resource or resource pool, and if a resource meets the second condition, the resource is selected as a resource in a candidate resource set.

In an embodiment of this application, the SL reference signal meets at least one of the following:
an interval between the SL reference signal and an SL reference signal received by the terminal is indicated according to DCI or SCI, predefined in a protocol, or determined through an RRC configuration; and
an interval between the SL reference signal and the SCI received by the terminal is indicated according to the DCI or the SCI, predefined in a protocol, or determined through an RRC configuration.

In the foregoing description, the DCI or the SCI indicates an interval between an SL PRS of UE 2 (which can be understood as the terminal) and a (most recently) received SL PRS of UE 1 (which can be understood as a terminal communicating with the terminal). A minimum value of the resource interval is predefined, preconfigured, or configured (if transceiver conversion and SCI demodulation are considered). Optionally, the SCI may be first stage SCI or second stage SCI. For that TX UE indicates RX (receiving) UE and the RX UE sends an SL PRS resource, the second stage SCI is more reliable. The first stage SCI indicates the TX UE to send an SL PRS resource.

The DCI or the SCI indicates an interval between the SL PRS of the UE 2 and the received SCI. A minimum value of the resource interval is predefined, preconfigured, or configured. Optionally, the SCI may be first stage SCI, second stage SCI, or standalone (standalone) SCI. Header UE or assisted UE may indicate a resource available for the RX UE. When the RX UE sends the SL PRS, refer to a location of the received SCI.

A resource used by the terminal to send the SL reference signal and a resource used by another terminal to receive the SL reference signal have different bandwidths. For example, the UE 1 sends the SL PRS in a bandwidth part (Bandwidth Part, BWP) range, and the UE 2 receives the SL PRS in a resource pool range.

In an embodiment of this application, the target transmission resource is determined according to the sensing or measuring window of the SL reference signal. In this case, at least one of the following is met:
the UE senses or measures an SL PRS in the sensing or measuring window (processing window) of the SL reference signal, that is, it is specified that a PRS in the sensing window needs to be sensed; and
a PRS resource configured or indicated by a network side device, the terminal, or another terminal is in a range of an SL PRS processing window, in other words, the UE does not expect that a configured or indicated PRS resource for sensing or measuring is outside the SL PRS processing window. That is, the reference signal is in a range of the sensing or measuring window of the SL reference signal.

In an embodiment of this application, the cyclic shift is determined according to at least one of the following:
determined through random selection;
determined by selecting according to a terminal identifier of the terminal;
determined by selecting according to a source terminal identifier;
determined by selecting according to a destination terminal identifier;
determined by selecting according to a group identifier;
determined by selecting according to a PSCCH cyclic redundancy check (Cyclic Redundancy Check, CRC); and
determined by selecting according to a resource pool identifier.

In the foregoing description, the group identifier includes two types: the group ID, indicating a group number of a group; and the member ID, indicating a member ID number in the group, to identify numbers of different UE in the group ID.

When the cyclic shift is determined, the "selection determining" may be that a transmit terminal selects, a scheduling terminal selects, or a receive terminal selects. If the "selection determining" is that another terminal selects, the terminal is notified through another signaling.

In an embodiment of this application, the transmit power is determined according to at least one of the following:
a target pathloss;
a power adjustment parameter, determined according to a predefined, preconfigured, or configured PRS power adjustment parameter alpha_SL_PRS, where optionally, a default alpha_SL_PRS value is predefined or preconfigured (for example, may be 1); and
an L1 RSRP measurement or an L3 RSRP measurement.

The terminal may adjust the transmit power according to the target pathloss, where the target pathloss includes at least one of the following:
a pathloss (pathloss) between the terminal and a network side device, for example, a downlink (DownLink, DL) pathloss;
a pathloss (for example, a DL pathloss) between the terminal and a receive terminal, where the terminal is a transmit terminal;
a maximum value in a plurality of pathlosses between the terminal and a plurality of other terminals, where the terminal is connected to the plurality of other terminals;
a minimum value in the plurality of pathlosses between the terminal and the plurality of other terminals;
an average value of the plurality of pathlosses between the terminal and the plurality of other terminals;
a pathloss between the terminal and a terminal farthest from the terminal in the plurality of other terminals;
a pathloss between the terminal and a terminal closest to the terminal in the plurality of other terminals;
a DL pathloss;
an SL pathloss; and
a pathloss determined according to a configured rule, for example, the pathloss is selected according to a distance or determined by comparing pathloss values.

In the foregoing description, the SCI is first stage SCI or second stage SCI.

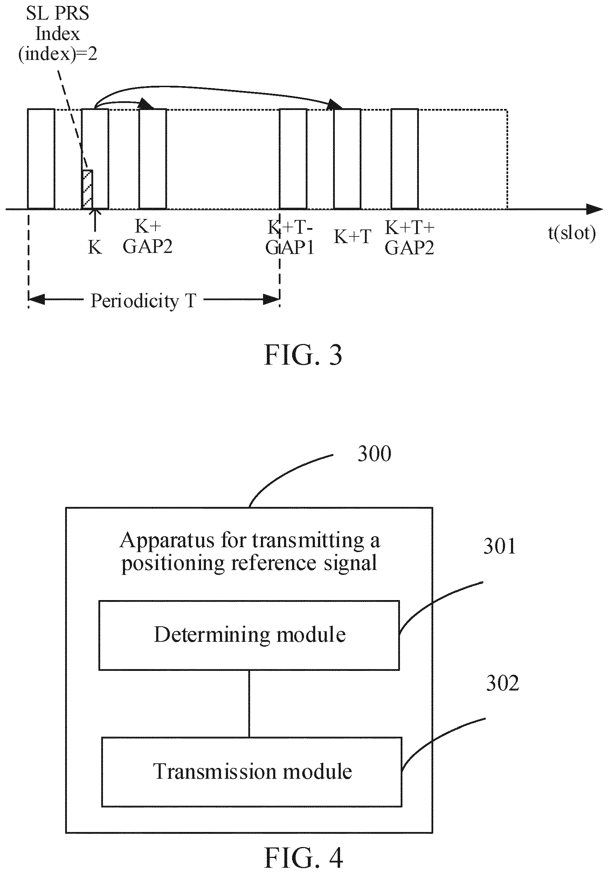

The following uses an SL PRS as an example to illustrate a resource selection method for an SL reference signal. It should be noted that, the following "/" means "or".
1. UE transmits an SL reference signal according to a resource that is predefined in a protocol/preconfigured/configured/indicated, or transmits the SL reference signal according to a resource determined by a predefined/preconfigured/configured/indicated rule. The resource for transmitting the SL reference signal meets at least one of the following:
   a) The SL reference signal is transmitted according to the resource that is predefined in the protocol/preconfigured by a network/configured by the network/configured by a terminal (predefining/RRC/PCS-RRC).
      i. The reference signal is configured/indicated as periodic/semi-static/aperiodic transmission.
         1. If periodic transmission, a periodicity value is configured/indicated.
         2. If semi-static transmission, DCI/SCI dynamically triggers the configured resource to be enabled/disabled.
         3. If aperiodic transmission, a location of the SL PRS is preconfigured/configured.
      ii. Optionally, an SL PRS configured by the terminal (for example, through the PC5-RRC) may override (override) an SL PRS configured by a network side (for example, through the RRC).
   b) MAC CE/DCI/SCI dynamically indicates resource information of the SL PRS (dynamic indication).
      i. Optionally, the dynamically indicated SL PRS may override resource information of the SL PRS configured through the RRC.
   c) One or more patterns (for example, N patterns) of an SL PRS resource that can be used by the UE are preconfigured/configured, and MAC CE/DCI/SCI indicates an SL PRS resource pattern used by the UE. (Available PRS patterns are configured through the RRC, and specific patterns are dynamically indicated.)
      i. If a number N of preconfigured/configured SL PRS resource patterns is equal to 1, a field value in the DCI/SCI is 0.
      ii. If the number N of preconfigured/configured SL PRS resource patterns is greater than 1, the field value in the DCI/SCI is log2(N) bits.
   d) A mapping relationship between a reserved resource/candidate resource and a PRS resource is predefined/preconfigured/configured, and the PRS resource is determined according to the reserved resource/candidate resource and the mapping relationship. At least one of the following is met:
      i. The PRS resource is in a time domain unit that a PSFCH is in.
         1. Optionally, a mapping relationship between time frequency domain (at least one of time domain and frequency domain) of the reserved resource/candidate resource and the PSFCH is predefined.
            a) A lowest subchannel of a reserved resource/candidate resource of the PSFCH is a start location of the PRS.
            b) A lowest PRB corresponding to the lowest subchannel of the reserved resource/candidate resource of the PSFCH is the start location of the PRS.
            c) A highest subchannel of the reserved resource/candidate resource of the PSFCH is an end location of the PRS.
            d) A highest PRB corresponding to the highest subchannel of the reserved resource/candidate resource of the PSFCH is the end location of the PRS.
         2. Optionally, when the PRS is configured, configuring for the PSFCH is enabled in a resource pool. (This may also directly depend on a network configuration.)
         3. Optionally, when the PRS is configured, a time domain location for enabling the configuring for the PSFCH in the resource pool is a candidate resource time domain location of the PRS.
            a) Optionally, the configuring for the PSFCH is enabled, but transmission of the PSFCH is not enabled.
            b) In this case, a time domain resource location of the PSFCH is used for transmission of the PRS rather than the transmission of the PSFCH.
         4. The PSFCH herein is configured in the resource pool, but a bandwidth of the PRS is not limited in the resource pool. This emphasizes that the PRS is in a time domain resource unit of the PSFCH.
      ii. The PRS resource is a sensing resource and is determined according to a resource of a PSSCH/PSCCH.
         1. A mapping relationship between the resource of the PSSCH/PSCCH and the PRS resource is defined/configured. A selected/candidate resource of the PRS is determined according to a selected/candidate resource of the PSSCH/PSCCH determined through sensing and the mapping relationship.
         2. This case is applicable to defining a PRS resource pool independently. However, sensing is not performed in the PRS resource pool, and a mapping relationship between the PRS resource pool and another resource pool used for transmission of the PSSCH/PSCCH is defined.
   e) SCI signaling may be indicated by 1st SCI/2nd SCI.
   f) The foregoing configuration may be a parameter configured for each carrier (Carrier)/BWP/resource pool.
2. The resource for transmitting the SL reference signal is obtained according to at least one of the following:
   a) A periodicity value of the SL PRS, meeting at least one of the following:
      i. One or more periodicity values are predefined/preconfigured/configured/indicated. (Note: herein, if the periodicity value is obtained according to SCI, a periodicity in an SCI format 1-A/a periodicity value of data may be read as a periodicity of the PRS, or the SCI independently indicates a periodicity value of the PRS, which is not limited thereto, and can be explained in the manual.)
      ii. Optionally, if the periodicity value is 0, UE transmits the SL PRS according to a time frequency domain indication (TRI), in other words, the UE transmits the SL PRS in an aperiodic transmission manner.
      iii. Optionally, the periodicity value is related to a priority of the SL PRS/QoS/a delay/a CBR/a CR/RSRP/the like.
         1. If the CBR is greater than a CBR threshold, the periodicity value is a first periodicity; and if the CBR is less than the CBR threshold, the periodicity value is a second periodicity. (A more congested resource pool indicates that the resource allocated to the PRS may be appropriately reduced, and an SL PRS periodicity increases.)
         2. If the delay is greater than or equal to a delay threshold, the periodicity value is the first periodicity; and if the delay is less than the delay threshold, the periodicity value is the second periodicity. (A shorter delay indicates that the resource needs to be sent as soon as possible, so that a sending periodicity is shorter.)
         3. If the priority is less than or equal to a priority threshold, the periodicity value is the first periodicity; and if the priority is greater than the priority threshold, the periodicity value is the second periodicity.
      iv. The periodicity value defined herein may refer to a periodicity value of one PRS resource, or may refer to a periodicity value of a PRS resource set.
   b) A time interval of the SL PRS resource. The time interval meets at least one of the following:
      i. The time interval is an interval from a previously reserved SL PRS (that is, a time interval from previous SL PRS sending).
         1. The previously reserved SL PRS is an SL PRS the same as the SL PRS (that is, a repetition interval).
         2. Alternatively, the previously reserved SL PRS is a previous SL PRS (differentiated by using UE as a unit, and may be a same PRS or a different PRS, without limitation) of the UE.
      ii. The time interval is an interval between a reserved SL PRS and an SL PRS sent for the first time (that is, a time unit for an initial SL PRS to send SCI).
         1. The reserved SL PRS and the SL PRS sent for the first time are a same SL PRS (that is, repetition) or different SL PRSs, which are not limited thereto.
   c) The SL PRS is N^{th} transmission/an SL PRS index.
      i. The UE excludes a corresponding resource according to the SL PRS index. (Exclusion for a PRS periodic resource is considered)
         1. For example, if SL PRS resource reservation indicates that three resources are reserved for an SL PRS, and the SL PRS index indicates second reservation, in a periodicity, the UE excludes, according to a field value, a time domain resource that the SL PRS is in and an SL PRS resource corresponding to next interval of the SL PRS; and when excluding a periodic resource, the UE excludes, according to the field value, a periodic resource corresponding to the SL PRS, a periodic resource corresponding to the SL PRS resource of the next interval of the SL PRS, and a periodic resource corresponding to an SL PRS resource of a previous interval of the SL PRS.
         2. As shown in FIG. 3, the UE sends the SL PRS in a slot K, and sends an SL PRS index indication, a first interval indication, a second interval indication, and a period indication that are carried by the SCI in the slot K. It is assumed that in the slot K, the SL PRS index = 2, a first interval indication value is GAP 1, a second interval indication value is GAP 2, and a period indication value is T. In this case, an SL PRS resource reserved by the terminal after the slot K is resources in a slot K+GAP 2, a slot K+T-GAP 1, a slot K+T, and a slot K+T+GAP 2. When the SCI of the UE is sensed, another terminal excludes the resources in the slot K+GAP 2, the slot K+T-GAP 1, the slot K+T, and the slot K+T+GAP 2 according to the SL PRS index indication, the first interval indication, the second interval indication, and the period indication.
      ii. In the foregoing description, a size of an indication field indicated by the MAC CE/DCI/SCI is log2(N)bits, where N is a predefined/preconfigured/configured value.
   d) A PRS sensing/measuring window (e.g., an SL PRS processing window), including at least one of the following parameters: (To limit a sensing/measuring location of the SL PRS for the sensing/measuring window, in the foregoing configurations, only a configuration falling within the window is sensed or measured.)
      i. A length/size.
      ii. A start location.
      iii. An end location.
      iv. A periodicity of the window.
      v. An interval of the window.
      vi. A priority of the window (if a capability of the UE is limited, an SL PRS in a window may be determined and sensed based on a priority).
      vii. A priority indication of data (indicating a priority rule in the window).
         1. SL data (data) is indicated as preferred, or the SL PRS is indicated as preferred.
         2. Alternatively, the SL PRS is indicated as preferred than an SL signal/SL channel in a slot, or the SL PRS is indicated as preferred than an SL signal/SL channel in a symbol of the SL PRS.
   e) A frequency domain resource bandwidth of the SL PRS.
      i. The frequency domain resource bandwidth is indicated by using a PRB/subchannel as a granularity.
      ii. Optionally, a configuration for the frequency domain resource bandwidth may be indicated to have a same size as an SL BWP.
      iii. Optionally, the frequency domain resource bandwidth is indicated to have a same frequency domain resource size as an SL resource pool.
      iv. Optionally, the bandwidth of the SL PRS is in a bandwidth of the SL data/SL PSSCH, or is the same as the bandwidth of the SL data/PSSCH.
   f) A resource pool ID. (If the SL PRS resource is limited in a resource pool range, it may be similar to that sending of data of TX UE is limited in the resource pool range, which is equivalent to a TX resource pool.)
      i. If the UE receives information, the UE determines a corresponding time/frequency domain resource range according to a configuration in the SL resource pool and the resource pool ID.
   g) A repetition factor (Repetition factor).
      i. The repetition factor is a number of times of repeated transmission of the SL PRS, or a number of reserved resources.
   h) An ID parameter, including at least one of the following: (selection may be performed through a modulo operation based on the ID, or selection may be performed based on sensing and the ID)
      i. Determined according to a UE ID.
      ii. Determined according to a source ID.
      iii. Determined according to a destination ID.
      iv. Determined according to a member ID.
      v. Determined according to a zone ID.
   i) A priority of the SL PRS, where the priority meets at least one of the following:
      i. The priority of the SL PRS is a value that is predefined in a protocol/preconfigured/configured/indicated; or, the priority of the SL PRS is related to (for example, the same as) a priority of an upper-layer service/a positioning service.
      ii. The priority of the SL PRS is determined according to a priority of a to-be-transmitted data packet/an SL process/a HARQ process/a MAC PDU (when the SL PRS is transmitted together with data).
         1. The priority of the to-be-transmitted data packet plus/minus an offset.
      iii. The offset is a parameter predefined in a protocol, or a preconfigured/configured/indicated parameter.
3. If the UE selects the SL PRS resource based on sensing, at least one of the following is met: (The UE selects a resource based on sensing in a mode 2.)
   a) The UE performs sensing in a preset resource/resource pool, and when a resource meets at least one of the following conditions, the resource is excluded:
      i. An SL PRS resource indicated/reserved by SCI. Optionally, when the UE senses an SL PRS resource, the resource is excluded. The SL PRS resource is determined according to the SCI.
      ii. RSRP of the SL PRS measured by the UE is greater than or equal to an RSRP threshold.
         1. The RSRP threshold is a value that is predefined in a protocol/preconfigured/configured/indicated.
            For example, a priority value of the SL PRS is predefined as 1.
         2. Alternatively, the RSRP threshold is a value determined according to a priority mapping rule.
            a) The RSRP threshold is determined according to a priority of an SL PRS to-be-sent by the UE and a priority of an SL PRS received by the UE, and a mapping rule.
            b) The RSRP threshold is determined according to an SL priority of a data packet to-be-sent by the UE and a priority of an SL data packet received by the UE, and a mapping rule. (In this case, it is considered that the SL PRS and the data packet are simultaneously sent, and the priorities are not independently configured, but the priority of the data packet is taken.)
            c) The RSRP threshold is determined according to the SL priority of the data packet to-be-sent by the UE plus a priority offset of the SL PRS.

            The priority offset may be an integer. For example, based on the SL priority value minus a positive offset indicating the priority of the SL PRS, the priority of the SL PRS is greater than the SL priority. In an SL, a smaller priority value indicates a higher priority.
         3. Alternatively, the RSRP threshold is a value determined according to a data priority and an RSRP offset.
            For example, a first RSRP threshold is determined according to SL data, and the RSRP threshold is the first RSRP threshold plus the RSRP offset. The RSRP offset is a predefined/preconfigured/configured/indicated parameter.
         4. The RSRP offset/priority offset is related to the CR/the CBR/a number of ACKs/a number of NACKs/or the like.
      iii. Occupied PRS resources are excluded, and selection is performed from remaining available PRS resources. (Whether to exclude a resource is considered based on an overlapping degree.)
         1. A resource in a corresponding time domain unit is excluded.
            a) When overlapping resources in the corresponding time domain unit are greater than a preset value/preset ratio, an entire frequency domain resource in the corresponding time domain unit is excluded. The preset value/preset ratio is a predefined/preconfigured/configured parameter.
            b) When remaining resources in the corresponding time domain unit do not meet QoS of a to-be-transmitted SL PRS/a required RE(s)/PRB(s), an entire resource in the corresponding time domain unit is excluded.
         2. An overlapping resource (an RE(s)/a PRB(s)/the like) in a corresponding time domain unit is excluded. Optionally, remaining frequency domain resources in the time domain unit are optional.
   b) The UE performs sensing in a preset resource/resource pool, and if a resource meets at least one of the following conditions, the resource is selected as a resource in a candidate resource set.
      i. RSRP of the SL PRS measured by the UE is less than or equal to an RSRP threshold. Definition of the RSRP threshold may use a same manner as that the resource is excluded in a).
      ii. A resource that is not reserved by DCI/SCI and that is in a time domain unit is selected.
      iii. A resource of a remaining RE(s)/PRB(s) in a time domain unit that a resource reserved by the DCI/SCI is in is selected.
      Optionally, when the resource/a resource ratio reserved by the DCI/SCI is less than a preset value/preset ratio, the method may be used. The preset value/preset ratio is a predefined/preconfigured/configured parameter.
   c) Optionally, in a) the resource is excluded and b) the resource is selected, DCI/SCI indicates whether to use the priority of the data or the priority of the SL PRS for resource exclusion/resource selection.
   d) Optionally, in a) the resource is excluded and b) the resource is selected, a maximum value/minimum value in the priority of the data and the priority of the SL PRS is selected for resource exclusion/resource selection.
4. UE 2 (for example, RX UE) determines an SL PRS resource. (A method for the UE 2 to independently determine a resource is the same as above, and a method for determining a resource based on TX UE/header UE is as follows.)
   a) The DCI/SCI indicates an interval between an SL PRS of the UE 2 and a (most recently) received SL PRS of UE 1.
      i. A minimum value of the resource interval is predefined/preconfigured/configured (if transceiver conversion and SCI demodulation are considered).
      ii. Optionally, the SCI is 1st SCI/2nd SCI. For that TX UE indicates RX UE and the RX UE sends an SL PRS resource in a), the 2nd SCI is more reliable. The 1st SCI indicates the TX UE to send an SL PRS resource.
   b) The DCI/SCI indicates an interval between the SL PRS of the UE 2 and the received SCI.
      i. A minimum value of the resource interval is predefined/preconfigured/configured.
      ii. Optionally, the SCI is 1st SCI/2nd SCI/standalone SCI. In b), header UE/assisted UE may indicate a resource available for the RX UE. When the RX UE sends the SL PRS, refer to a location of the received SCI.
5. If the SL PRS processing window is configured/indicated, at least one of the following is met:
   a) The UE senses/measures an SL PRS in the SL PRS processing window. (That is, it is specified that a PRS in the sensing window needs to be sensed.)
   b) A PRS resource configured/indicated by a network side/terminal side is in a range of the SL PRS processing window, in other words, the UE does not expect that a configured/indicated PRS resource for sensing/measuring is outside the SL PRS processing window.
6. When the UE 1 sends an SL PRS and the UE 2 receives an SL PRS, different bandwidths may be used.
   The UE 1 sends the SL PRS in a BWP range, and the UE 2 receives the SL PRS in a resource pool range.
7. Resource selection of the SL PRS further includes at least one of the following:
   a) A cyclic shift (cyclic shift) of the SL PRS.
      i. Optionally, the UE randomly selects the cyclic shift.
      ii. Optionally, the UE selects the cyclic shift according to at least one of a UE ID/source ID/destination ID/group ID/PSCCH CRC/resource pool ID.
8. The UE adjusts transmit power according to a pathloss, and power control meets at least one of the following:
   a) The pathloss is determined according to at least one of the following:
      i. A pathloss between the UE and a base station (for example, a DL pathloss).
      ii. A pathloss between the UE and a receive terminal (for example, an SL pathloss).
      iii. If the terminal is connected to a plurality of terminals, at least one of the following is met:
         1. A maximum value of a plurality of pathlosses between the UE and the plurality of terminals.
         2. A minimum value of the plurality of pathlosses between the UE and the plurality of terminals.
         3. An average value of the plurality of pathlosses between the UE and the plurality of terminals.
         4. A pathloss between the UE and UE farthest from the UE.
         5. A pathloss between the UE and UE closest to the UE.
      iv. Optionally, the base station/terminal preconfigures/configures the UE to perform power control according to the DL pathloss or the SL pathloss.
      v. Optionally, power control is performed according to a pathloss corresponding to a method (e.g., the pathloss is selected according to a distance or determined by comparing pathloss values) preconfigured/configured by the base station/terminal.
   b) The power control is determined according to a predefined/preconfigured/configured PRS power adjustment parameter alpha_SL_PRS.
      Optionally, a default alpha_SL_PRS value is predefined/preconfigured (for example, may be 1).
   c) The power control is determined based on an L1 RSRP measurement or an L3 RSRP measurement.
9. A time domain resource unit defined in the foregoing method may be a symbol, a slot, a subframe, ms, s, or the like. For different parameters, time domain units may be different, which is not limited thereto.

A method for transmitting a reference signal provided in this application is described below by using an example.
I. A network side device configures a periodic reserved SL PRS resource.
   In an implementation:
      1. A network (namely, the network side device) configures a resource pool/BWP/carrier resource for transmitting an SL PRS.
      2. The network/a terminal configures a periodicity T for the SL PRS, and a start location t. The network configures two sets of parameters: t1 and T1; and t2 and T2. (In this way, in a TX-RX UE pair, TX UE uses one set, and RX UE uses one set, so that a measuring interval is not too far.)
      3. UE 1 sends an SL PRS 1 on a corresponding resource according to t1 and T1. UE 2 senses an SL PRS, and sends, if the SL PRS 1 is received, an SL PRS 2 on an SL PRS resource corresponding to closest t2 and T2.
   In another implementation:
      1. A network configures a resource pool resource for transmitting an SL PRS.
      2. The network/a terminal configures a periodicity T for the SL PRS, and a start location t.
      3. UE 1 sends an SL PRS 1 on a corresponding resource according to t and T. UE 2 senses an SL PRS, and sends, if the SL PRS 1 is received, an SL PRS 2 on a closest available periodic SL PRS resource.
II. A network side configures a sending resource of TX UE, and the TX UE indicates a resource for RX UE.
   1. A network configures a resource pool/BWP/carrier resource for transmitting an SL PRS.
   2. The network/a terminal configures a periodicity T for the SL PRS, and a start location t.
   3. UE 1 sends an SL PRS 1 on a corresponding resource according to t and T. The UE 1 carries SL PRS resource indication information of UE 2 in 1st SCI (namely, first stage SCI) or 2nd SCI (namely, second stage SCI).
   4. The UE 2 receives SCI, and senses the SL PRS. An SL PRS resource of the UE 2 is determined according to an indication in the SCI, and the UE 2 sends an SL PRS 2 on a closest available SL PRS resource.
III. UE selects an SL PRS resource through sensing.
   1. A network configures a resource pool/BWP/carrier resource for transmitting an SL PRS.
   2. The UE performs SCI sensing in the resource pool/BWP/carrier configured for the SL PRS. The following is determined according to an indication in SCI.
      a) An SL PRS resource indicated by the SCI.
      b) An RSRP threshold is determined according to a priority carried in the SCI and a priority of a to-be-transmitted SL PRS, or the RSRP threshold is determined according to the priority carried in the SCI, the priority of the to-be-transmitted SL PRS, and a priority offset.
   3. The UE measures RSRP of the SL PRS, and compares the measured RSRP with the RSRP threshold.
      a) If the measured RSRP of the SL PRS > the RSRP threshold, the UE 1 excludes the SL PRS resource indicated/reserved in the SCI. In other words, the UE 1 does not use the resource indicated/reserved in the SCI as a candidate resource.
      b) If the measured RSRP of the SL PRS <= the RSRP threshold, the UE 1 does not exclude the SL PRS resource indicated/reserved in the SCI. In other words, the UE 1 uses the resource indicated/reserved in the SCI as the candidate resource.
   4. The UE selects, from a candidate resource set, one or more resources as the SL PRS resource.
   5. The UE sends an SL PRS on a closest available SL PRS resource.
IV. TX UE selects an SL PRS resource through sensing, and TX UE indicates a resource available for sending an SL PRS for RX UE.
   1. A network configures a resource pool/BWP/carrier resource for transmitting an SL PRS.
   2. UE 1 performs SCI sensing in the resource pool/BWP/carrier configured for the SL PRS. The following is determined according to an indication in SCI.
      a) An SL PRS resource indicated by SCI.
      b) An RSRP threshold is determined according to a priority carried in the SCI and a priority of a to-be-transmitted SL PRS, or the RSRP threshold is determined according to the priority carried in the SCI, the priority of the to-be-transmitted SL PRS, and a priority offset.
   3. The UE 1 measures RSRP of the SL PRS, and compares the measured RSRP with the RSRP threshold.
      a) If the measured RSRP of the SL PRS > the RSRP threshold, the UE 1 excludes the SL PRS resource indicated/reserved in the SCI. In other words, the UE 1 does not use the resource indicated/reserved in the SCI as a candidate resource.
      b) If the measured RSRP of the SL PRS <= the RSRP threshold, the UE 1 does not exclude the SL PRS resource indicated/reserved in the SCI. In other words, the UE 1 uses the resource indicated/reserved in the SCI as the candidate resource.
   4. The UE 1 selects, from a candidate resource set, one or more resources as the SL PRS resource.
   5. The UE 1 sends an SL PRS on a closest available SL PRS resource. The UE 1 carries SL PRS resource indication information of UE 2 in 1st SCI/2nd SCI.
   6. The UE 2 receives SCI, and senses the SL PRS. An SL PRS resource of the UE 2 is determined according to an indication in the SCI, and the UE 2 sends an SL PRS 2 on a closest available SL PRS resource.

On an SL reference signal resource, UE may send or receive an SL reference signal, to position UE performing transmission of the SL reference signal.

It should be noted that, in the method for transmitting a reference signal provided in the embodiments of this application, an execution entity may be an apparatus for transmitting a reference signal, or a control module configured to execute and load the method for transmitting a reference signal in the apparatus for transmitting a reference signal.

An example in which the apparatus for transmitting a reference signal executes and loads the method for transmitting a reference signal is used in the following embodiments to describe the apparatus for transmitting a reference signal provided in the embodiments of this application.

FIG. 4 is a structural diagram of an apparatus for transmitting a reference signal according to an embodiment of this application. An apparatus 300 for transmitting a reference signal includes:
a determining module 301, configured to determine a target transmission resource for transmitting a sidelink SL reference signal, where the SL reference signal includes a reference signal for positioning; and
a transmission module 302, configured to transmit the SL reference signal through the target transmission resource.

Optionally, the target transmission resource includes at least one of the following:
a resource predefined in a protocol;
a resource configured by a network side device;
a resource configured by a terminal or another terminal;
a resource indicated by the network side device;
a resource indicated by the terminal or the another terminal;
a resource determined according to a first mapping relationship between a first resource and a reserved resource;
a resource determined according to a second mapping relationship between the first resource and a candidate resource;
a resource determined according to a rule predefined in the protocol;
a resource determined according to a rule configured by the network side device;
a resource determined according to a rule configured by the terminal or the another terminal; and
a resource determined according to a rule indicated by the network side device, where
the first resource includes at least one of the following:
a resource of a physical sidelink shared channel PSSCH;
a resource of a physical sidelink control channel PSCCH;
a candidate resource of the PSCCH;
a candidate resource of the PSSCH;
a resource of a physical sidelink feedback channel PSFCH;
a candidate resource of the PSFCH;
a resource of a physical sidelink broadcast channel PSBCH;
a resource of a demodulation reference signal DMRS;
a resource of a channel state information reference signal CSI-RS; and
a resource of a phase-tracking reference signal PTRS.

Optionally, the target transmission resource is a periodic resource, or a semi-static resource, or an aperiodic resource.

Optionally, a target transmission resource configured by the terminal or the another terminal overrides a target transmission resource configured by the network side device;
and/or
a target transmission resource indicated through a medium access control control element MAC CE, downlink control information DCI, or sidelink control information SCI overrides a target transmission resource configured through radio resource control RRC.

Optionally, the network side device configures at least one pattern of the target transmission resource for the terminal, a target pattern of the target transmission resource is indicated through a MAC CE sent by the network side device, indicated through DCI sent by the network side device, or indicated through SCI sent by the terminal, and the target pattern is a pattern in the at least one pattern.

Optionally, in a case that there is the first mapping relationship between the first resource and the reserved resource or there is the second mapping relationship between the first resource and the candidate resource, the target transmission resource is determined according to predefining and/or sensing.

Optionally, the target transmission resource meets at least one of the following:
a lowest subchannel of the target transmission resource is a start location of the SL reference signal;
a lowest physical resource block PRB corresponding to the lowest subchannel of the target transmission resource is the start location of the SL reference signal;
a highest subchannel of the target transmission resource is an end location of the SL reference signal; and
a highest PRB corresponding to the highest subchannel of the target transmission resource is the end location of the SL reference signal.

Optionally, in a case that the SL reference signal is configured, a PSFCH is enabled.

Optionally, a time domain location of the enabled PSFCH is a candidate resource time domain location of the target transmission resource.

Optionally, in a case that the first resource includes the resource of the PSSCH and/or the resource of the PSCCH, or the first resource includes the candidate resource of the PSSCH and/or the candidate resource of the PSCCH, the target transmission resource is determined according to at least one of sensing, the first mapping relationship, and the second mapping relationship.

Optionally, the target transmission resource is determined according to at least one of the following:
a periodicity value of an SL reference signal resource;
a time interval of the SL reference signal resource;
a number of times of transmission of the SL reference signal;
an index of the SL reference signal;
a sensing or measuring window of the SL reference signal;
a frequency domain resource bandwidth of the SL reference signal;
a resource pool identifier;
a repetition factor;
an identifier parameter;
a priority of the SL reference signal;
a cyclic shift; and
transmit power.

Optionally, in a case that the periodicity value of the SL reference signal resource is 0, the SL reference signal resource is determined according to a time domain indication and/or a frequency domain indication, or transmission of the SL reference signal resource is aperiodic transmission.

Optionally, the periodicity value of the SL reference signal resource is determined according to at least one of the following:
the priority of the SL reference signal;
quality of service QoS;
a delay;
a channel busy ratio CBR;
a channel occupancy ratio CR;
reference signal received power RSRP; and
a reference signal strength indicator RSSI.

Optionally, the time interval of the SL reference signal resource meets at least one of the following:
the time interval is an interval from a previously reserved SL reference signal resource; and
the time interval is an interval between a reserved SL reference signal resource and an SL reference signal resource sent for the first time.

Optionally, a parameter of the sensing or measuring window of the SL reference signal includes at least one of the following:
a length;
a size;
a start location;
an end location;
a periodicity of the window;
an interval of the window;
a priority of the window; and
a priority indication of data.

Optionally, the frequency domain resource bandwidth of the SL reference signal meets at least one of the following:
the frequency domain resource bandwidth is the same as an SL bandwidth part BWP;
the frequency domain resource bandwidth is the same as an SL resource pool bandwidth;
the frequency domain resource bandwidth is within a bandwidth of SL data or an SL PSSCH;
the frequency domain resource bandwidth is the same as the bandwidth of the SL data or the SL PSSCH; and
the frequency domain resource bandwidth is indicated by using a PRB or a subchannel as a granularity.

Optionally, the priority of the SL reference signal meets at least one of the following:
the priority is a value that is predefined in a protocol, configured, or indicated;
the priority is related to a priority of an upper-layer service or a positioning service;
the priority is determined according to a priority of a to-be-transmitted data packet, a priority of an SL process, a priority of a hybrid automatic repeat request HARQ process, or a priority of a MAC protocol data unit PDU; and
the priority is determined according to a priority offset, where the priority offset is a predefined, preconfigured, configured, or indicated value.

Optionally, the target transmission resource is determined according to a sensing result, and when a resource determined through the sensing result meets a first condition, the resource determined through the sensing result is excluded, where the first condition includes at least one of the following:
an SL reference signal resource indicated or reserved by SCI;
a resource whose RSRP is greater than or equal to an RSRP threshold;
a reference signal resource whose resource overlapping degree with an occupied reference signal resource in a time domain unit meets a preset condition.

Optionally, the RSRP threshold is determined according to at least one of the following:
the threshold is a value that is predefined in a protocol, configured, or indicated;
the threshold is a value determined according to a priority mapping rule; and
the threshold is a value determined according to a data priority and an RSRP offset.

Optionally, the target transmission resource is determined according to a sensing result, and if a resource determined through the sensing result meets a second condition, the resource determined through the sensing result is selected, where the second condition includes at least one of the following:
a resource whose RSRP is less than or equal to an RSRP threshold;
a resource that is not reserved by DCI or SCI and that is in a time domain unit; and
a resource of a remaining resource element RE, PRB, or subchannel in a time domain unit that a resource reserved by the DCI or the SCI is in.

Optionally, the SL reference signal meets at least one of the following:
an interval between the SL reference signal and an SL reference signal received by the terminal is indicated according to DCI or SCI, predefined in a protocol, or determined through an RRC configuration; and
an interval between the SL reference signal and the SCI received by the terminal is indicated according to the DCI or the SCI, predefined in a protocol, or determined through an RRC configuration.

Optionally, a resource used by the terminal to send the SL reference signal and a resource used by another terminal to receive the SL reference signal have different bandwidths.

Optionally, the target transmission resource is determined according to the sensing or measuring window of the SL reference signal; and
correspondingly, the transmission module 302 is configured to sense or measure the SL reference signal in the sensing or measuring window of the SL reference signal.

Optionally, the target transmission resource is determined according to the sensing or measuring window of the SL reference signal, and the reference signal is in a range of the sensing or measuring window of the SL reference signal.

Optionally, the transmit power is determined according to at least one of the following:
a target pathloss;
a power adjustment parameter; and
an L1 RSRP measurement or an L3 RSRP measurement.

Optionally, the target pathloss includes at least one of the following:
a pathloss between the terminal and a network side device;
a pathloss between the terminal and a receive terminal, where the terminal is a transmit terminal;
a maximum value in a plurality of pathlosses between the terminal and a plurality of other terminals, where the terminal is connected to the plurality of other terminals;
a minimum value in the plurality of pathlosses between the terminal and the plurality of other terminals;
an average value of the plurality of pathlosses between the terminal and the plurality of other terminals;
a pathloss between the terminal and a terminal farthest from the terminal in the plurality of other terminals;
a pathloss between the terminal and a terminal closest to the terminal in the plurality of other terminals;
a DL pathloss;
an SL pathloss; and
a pathloss determined according to a configured rule.

Optionally, the cyclic shift is determined according to at least one of the following:
determined through random selection;
determined by selecting according to a terminal identifier of the terminal;
determined by selecting according to a source terminal identifier;
determined by selecting according to a destination terminal identifier;
determined by selecting according to a group identifier;
determined by selecting according to a PSCCH cyclic redundancy check CRC; and
determined by selecting according to a resource pool identifier.

Optionally, the SCI is first stage SCI or second stage SCI.

The apparatus 300 for transmitting a reference signal in this embodiment of this application may be an apparatus, or may be a component, an integrated circuit, or a chip in a terminal.

The apparatus 300 for transmitting a reference signal in this embodiment of this application may be an apparatus having an operating system. The operating system may be an Android (Android) operating system, may be an ios operating system, or may be another possible operating system, which is not specifically limited in this embodiment of this application.

The apparatus 300 for transmitting a reference signal provided in this embodiment of this application can implement procedures implemented in the method embodiment of FIG. 2, and can achieve the same technical effects. To avoid repetition, details are not described herein again.

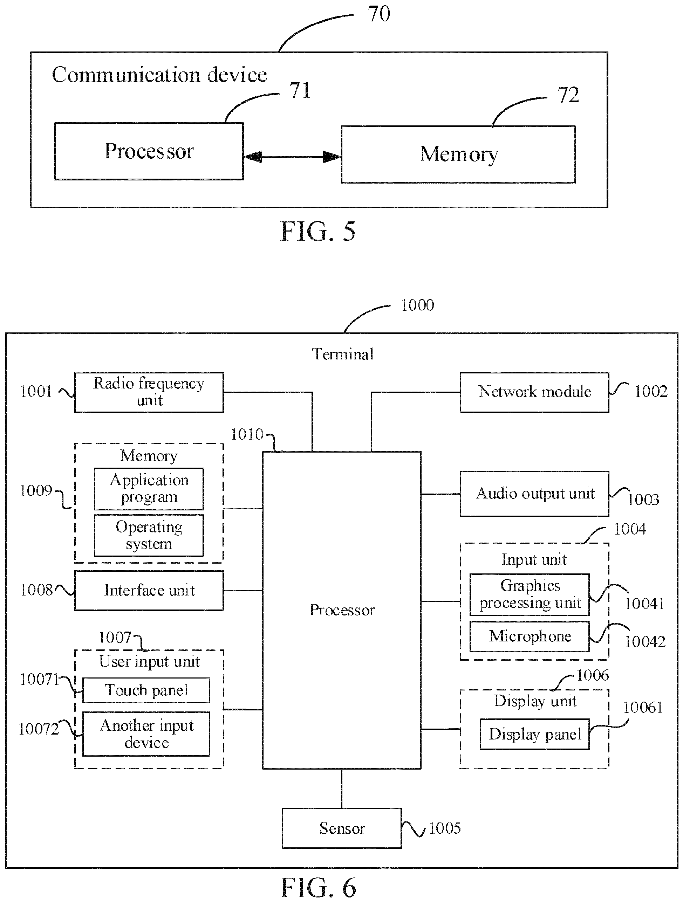

Optionally, as shown in FIG. 5, an embodiment of this application further provides a communication device 70, including a processor 71, a memory 72, and a program or instructions stored in the memory 72 and runnable on the processor 71. For example, when the communication device 70 is a terminal, the program or the instructions, when executed by the processor 71, implement all processes of the embodiments of the method for transmitting a reference signal shown in FIG. 2, and can achieve the same technical effects.

FIG. 6 is a schematic diagram of a hardware structure of a terminal that implements the embodiments of this application.

The terminal 1000 includes, but is not limited to, components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 further includes a power supply (such as a battery) for supplying power to the components. The power supply may logically connect to the processor 1010 by using a power supply management system, thereby implementing functions, such as charging, discharging, and power consumption management, by using the power supply management system. A terminal structure shown in FIG. 6 does not constitute a limitation to the terminal, and the terminal may include more or fewer components than those shown in the figure, or some components may be combined, or a different component deployment may be used. Details are not described herein again.

It should be understood that, in this embodiment of this application, the input unit 1004 may include a graphics processing unit (Graphics Processing Unit, GPU) 10041 and a microphone 10042. The graphics processing unit 10041 processes image data of a still picture or a video obtained by an image capture apparatus (such as a camera) in a video capture mode or an image capture mode. The display unit 1006 may include a display panel 10061, for example, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include a touch detection apparatus and a touch controller. The another input device 10072 may include, but is not limited to, a physical keyboard, a function key (such as a volume control key, a switch key, or the like), a trackball, a mouse, and an operating lever, which is not described in detail herein.

In this embodiment of this application, the radio frequency unit 1001 receives downlink data from a network side device and sends downlink data to the processor 1010 for processing. In addition, the radio frequency unit transmits uplink data to the base station. Generally, the radio frequency unit 1001 includes, but is not limited to, an antenna, at least one amplifier, a transceiver, a coupler, a low noise amplifier, a duplexer, and the like.

The memory 1009 may be configured to store a software program or instruction and various data. The memory 1009 may mainly include a program or instruction storage region and a data storage region. The program or instruction storage region may store an operating system, an application program or instruction required by at least one function (for example, a sound playback function and an image playback function), or the like. The memory 1009 may include a high speed random access memory, and may also include a non-volatile memory. The nonvolatile memory may be a read-only memory (read-only memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. For example, the non-volatile memory may be at least one magnetic disk storage device, a flash storage device, or other volatile solid-state storage devices.

The processor 1010 may include one or more processing units. Optionally, the processor 1010 may integrate an application processor and a modem. The application processor mainly processes an operating system, a user interface, an application program or instructions, and the like. The modem mainly processes wireless communication, such as a baseband processor. It may be understood that, the foregoing modem may not be integrated into the processor 1010.

The processor 1010 is configured to determine a target transmission resource for transmitting a sidelink SL reference signal, where the SL reference signal includes a reference signal for positioning; and

the radio frequency unit 1001 is configured to transmit the SL reference signal through the target transmission resource.

Optionally, the target transmission resource includes at least one of the following:
a resource predefined in a protocol;
a resource configured by a network side device;
a resource configured by a terminal or another terminal;
a resource indicated by the network side device;
a resource indicated by the terminal or the another terminal;
a resource determined according to a first mapping relationship between a first resource and a reserved resource;
a resource determined according to a second mapping relationship between the first resource and a candidate resource;
a resource determined according to a rule predefined in the protocol;
a resource determined according to a rule configured by the network side device;
a resource determined according to a rule configured by the terminal or the another terminal; and
a resource determined according to a rule indicated by the network side device, where
the first resource includes at least one of the following:
a resource of a physical sidelink shared channel PSSCH;
a resource of a physical sidelink control channel PSCCH;
a candidate resource of the PSCCH;
a candidate resource of the PSSCH;
a resource of a physical sidelink feedback channel PSFCH;
a candidate resource of the PSFCH;
a resource of a physical sidelink broadcast channel PSBCH;
a resource of a demodulation reference signal DMRS;
a resource of a channel state information reference signal CSI-RS; and
a resource of a phase-tracking reference signal PTRS.

Optionally, the target transmission resource is a periodic resource, or a semi-static resource, or an aperiodic resource.

Optionally, a target transmission resource configured by the terminal or the another terminal overrides a target transmission resource configured by the network side device;
and/or
a target transmission resource indicated through a medium access control control element MAC CE, downlink control information DCI, or sidelink control information SCI overrides a target transmission resource configured through radio resource control RRC.

Optionally, the network side device configures at least one pattern of the target transmission resource for the terminal, a target pattern of the target transmission resource is indicated through a MAC CE sent by the network side device, indicated through DCI sent by the network side device, or indicated through SCI sent by the terminal, and the target pattern is a pattern in the at least one pattern.

Optionally, in a case that there is the first mapping relationship between the first resource and the reserved resource or there is the second mapping relationship between the first resource and the candidate resource, the target transmission resource is determined according to predefining and/or sensing.

Optionally, the target transmission resource meets at least one of the following:
a lowest subchannel of the target transmission resource is a start location of the SL reference signal;
a lowest physical resource block PRB corresponding to the lowest subchannel of the target transmission resource is the start location of the SL reference signal;
a highest subchannel of the target transmission resource is an end location of the SL reference signal; and
a highest PRB corresponding to the highest subchannel of the target transmission resource is the end location of the SL reference signal.

Optionally, in a case that the SL reference signal is configured, a PSFCH is enabled.

Optionally, a time domain location of the enabled PSFCH is a candidate resource time domain location of the target transmission resource.

Optionally, in a case that the first resource includes the resource of the PSSCH and/or the resource of the PSCCH, or the first resource includes the candidate resource of the PSSCH and/or the candidate resource of the PSCCH, the target transmission resource is determined according to at least one of sensing, the first mapping relationship, and the second mapping relationship.

Optionally, the target transmission resource is determined according to at least one of the following:
a periodicity value of an SL reference signal resource;
a time interval of the SL reference signal resource;
a number of times of transmission of the SL reference signal;
an index of the SL reference signal;
a sensing or measuring window of the SL reference signal;
a frequency domain resource bandwidth of the SL reference signal;
a resource pool identifier;
a repetition factor;
an identifier parameter;
a priority of the SL reference signal;
a cyclic shift; and
transmit power.

Optionally, in a case that the periodicity value of the SL reference signal resource is 0, the SL reference signal resource is determined according to a time domain indication and/or a frequency domain indication, or transmission of the SL reference signal resource is aperiodic transmission.

Optionally, the periodicity value of the SL reference signal resource is determined according to at least one of the following:
the priority of the SL reference signal;
quality of service QoS;
a delay;
a channel busy ratio CBR;
a channel occupancy ratio CR;
reference signal received power RSRP; and
a reference signal strength indicator RSSI.

Optionally, the time interval of the SL reference signal resource meets at least one of the following:
the time interval is an interval from a previously reserved SL reference signal resource; and
the time interval is an interval between a reserved SL reference signal resource and an SL reference signal resource sent for the first time.

Optionally, a parameter of the sensing or measuring window of the SL reference signal includes at least one of the following:
a length;
a size;
a start location;
an end location;
a periodicity of the window;
an interval of the window;
a priority of the window; and
a priority indication of data.

Optionally, the frequency domain resource bandwidth of the SL reference signal meets at least one of the following:
the frequency domain resource bandwidth is the same as an SL bandwidth part BWP;
the frequency domain resource bandwidth is the same as an SL resource pool bandwidth;
the frequency domain resource bandwidth is within a bandwidth of SL data or an SL PSSCH;
the frequency domain resource bandwidth is the same as the bandwidth of the SL data or the SL PSSCH; and
the frequency domain resource bandwidth is indicated by using a PRB or a subchannel as a granularity.

Optionally, the priority of the SL reference signal meets at least one of the following:
the priority is a value that is predefined in a protocol, configured, or indicated;
the priority is related to a priority of an upper-layer service or a positioning service;
the priority is determined according to a priority of a to-be-transmitted data packet, a priority of an SL process, a priority of a hybrid automatic repeat request HARQ process, or a priority of a MAC protocol data unit PDU; and
the priority is determined according to a priority offset, where the priority offset is a predefined, preconfigured, configured, or indicated value.

Optionally, the target transmission resource is determined according to a sensing result, and when a resource determined through the sensing result meets a first condition, the resource determined through the sensing result is excluded, where the first condition includes at least one of the following:
an SL reference signal resource indicated or reserved by SCI;
a resource whose RSRP is greater than or equal to an RSRP threshold;
a reference signal resource whose resource overlapping degree with an occupied reference signal resource in a time domain unit meets a preset condition.

Optionally, the RSRP threshold is determined according to at least one of the following:
the threshold is a value that is predefined in a protocol, configured, or indicated;
the threshold is a value determined according to a priority mapping rule; and
the threshold is a value determined according to a data priority and an RSRP offset.

Optionally, the target transmission resource is determined according to a sensing result, and if a resource determined through the sensing result meets a second condition, the resource determined through the sensing result is selected, where the second condition includes at least one of the following:
a resource whose RSRP is less than or equal to an RSRP threshold;
a resource that is not reserved by DCI or SCI and that is in a time domain unit; and
a resource of a remaining resource element RE, PRB, or subchannel in a time domain unit that a resource reserved by the DCI or the SCI is in.

Optionally, the SL reference signal meets at least one of the following:
an interval between the SL reference signal and an SL reference signal received by the terminal is indicated according to DCI or SCI, predefined in a protocol, or determined through an RRC configuration; and
an interval between the SL reference signal and the SCI received by the terminal is indicated according to the DCI or the SCI, predefined in a protocol, or determined through an RRC configuration.

Optionally, a resource used by the terminal to send the SL reference signal and a resource used by another terminal to receive the SL reference signal have different bandwidths.

Optionally, the target transmission resource is determined according to the sensing or measuring window of the SL reference signal; and
correspondingly, the radio frequency unit 1001 is configured to sense or measure the SL reference signal in the sensing or measuring window of the SL reference signal.

Optionally, the target transmission resource is determined according to the sensing or measuring window of the SL reference signal, and the reference signal is in a range of the sensing or measuring window of the SL reference signal.

Optionally, the transmit power is determined according to at least one of the following:
a target pathloss;
a power adjustment parameter; and
an L1 RSRP measurement or an L3 RSRP measurement.

Optionally, the target pathloss includes at least one of the following:
a pathloss between the terminal and a network side device;
a pathloss between the terminal and a receive terminal, where the terminal is a transmit terminal;
a maximum value in a plurality of pathlosses between the terminal and a plurality of other terminals, where the terminal is connected to the plurality of other terminals;
a minimum value in the plurality of pathlosses between the terminal and the plurality of other terminals;
an average value of the plurality of pathlosses between the terminal and the plurality of other terminals;
a pathloss between the terminal and a terminal farthest from the terminal in the plurality of other terminals;
a pathloss between the terminal and a terminal closest to the terminal in the plurality of other terminals;
a DL pathloss;
an SL pathloss; and
a pathloss determined according to a configured rule.

Optionally, the cyclic shift is determined according to at least one of the following:
determined through random selection;
determined by selecting according to a terminal identifier of the terminal;
determined by selecting according to a source terminal identifier;
determined by selecting according to a destination terminal identifier;
determined by selecting according to a group identifier;
determined by selecting according to a PSCCH cyclic redundancy check CRC; and
determined by selecting according to a resource pool identifier.

Optionally, the SCI is first stage SCI or second stage SCI.

The terminal 1000 provided in this embodiment of this application can implement all processes implemented by the embodiments of the method of FIG. 2, and achieve technical effects. To avoid repetition, details are not described herein again.

An embodiment of this application further provides a readable storage medium, storing a program or instructions. The program or the instructions, when executed by a processor, implement all processes of the embodiments of the method shown in FIG. 2, and can achieve the same technical effects. To avoid repetition, details are not described herein again.

The processor is the processor in the terminal or the network side device in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, including: a processor and a communication interface, where the communication interface is coupled to the processor, and the processor is configured to run a program or instructions of a network side device, to implement all processes of the embodiments of the method shown in FIG. 2, and can achieve the same technical effects. To avoid repetition, details are not described herein again.

It should be understood that, the chip mentioned in this embodiment of this application may also be referred to as a system-level chip, a system chip, a chip system, a system on chip, or the like.

It should be noted that, the term "include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one ..." does not exclude that there are still other same elements in the processes, methods, objects, or apparatuses. In addition, it should be noted that the scope of the methods and apparatuses in the implementations of this application is not limited to performing the functions in the order shown or discussed, but may also include performing, according to involved functions, the functions basically simultaneously or in a reverse order. For example, the described methods may be performed in an order different from that described, and various steps may also be added, omitted, or combined. In addition, features described with reference to some examples may be combined in other examples.

Through the descriptions of the foregoing implementations, a person skilled in the art may clearly understand that the method according to the foregoing embodiments may be implemented by means of software and a necessary general hardware platform, and certainly, may alternatively be implemented by hardware, but in many cases, the former manner is a better implementation. Based on such an understanding, the technical solutions in this application essentially or the part contributing to the existing technologies may be implemented in the form of a software product. The computer software product is stored in a storage medium (for example, a read-only memory (ROM)/random access memory (RAM), a magnetic disk or an optical disc), and includes several instructions for instructing a terminal (which may be a mobile phone, a computer, a server, an air conditioner, a network, or the like) to perform the method described in the embodiments of this application.

The embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A method for transmitting a reference signal, comprising:
determining, by a terminal, a target transmission resource for transmitting a sidelink SL reference signal, wherein the SL reference signal comprises a reference signal for positioning; and
transmitting, by the terminal, the SL reference signal through the target transmission resource.

2. The method according to claim 1, wherein the target transmission resource comprises at least one of the following:
a resource predefined in a protocol;
a resource configured by a network side device;
a resource configured by the terminal or another terminal;
a resource indicated by the network side device;
a resource indicated by the terminal or the another terminal;
a resource determined according to a first mapping relationship between a first resource and a reserved resource;
a resource determined according to a second mapping relationship between the first resource and a candidate resource;
a resource determined according to a rule predefined in the protocol;
a resource determined according to a rule configured by the network side device;
a resource determined according to a rule configured by the terminal or the another terminal; and
a resource determined according to a rule indicated by the network side device, wherein
the first resource comprises at least one of the following:
a resource of a physical sidelink shared channel PSSCH;
a resource of a physical sidelink control channel PSCCH;
a candidate resource of the PSCCH;
a candidate resource of the PSSCH;
a resource of a physical sidelink feedback channel PSFCH;
a candidate resource of the PSFCH;
a resource of a physical sidelink broadcast channel PSBCH;
a resource of a demodulation reference signal DMRS;
a resource of a channel state information reference signal CSI-RS; and
a resource of a phase-tracking reference signal PTRS.

3. The method according to claim 1, wherein the target transmission resource is a periodic resource, or a semi-static resource, or an aperiodic resource.

4. The method according to claim 2, wherein a target transmission resource configured by the terminal or the another terminal overrides a target transmission resource configured by the network side device;
and/or
a target transmission resource indicated through a medium access control control element MAC CE, downlink control information DCI, or sidelink control information SCI overrides a target transmission resource configured through radio resource control RRC.

5. The method according to claim 2, wherein the network side device configures at least one pattern of the target transmission resource for the terminal, a target pattern of the target transmission resource is indicated through a MAC CE sent by the network side device, indicated through DCI sent by the network side device, or indicated through SCI sent by the terminal, and the target pattern is a pattern in the at least one pattern.

6. The method according to claim 2, wherein in a case that there is the first mapping relationship between the first resource and the reserved resource or there is the second mapping relationship between the first resource and the candidate resource, the target transmission resource is determined according to predefining and/or sensing.

7. The method according to claim 1, wherein the target transmission resource meets at least one of the following:
a lowest subchannel of the target transmission resource is a start location of the SL reference signal;
a lowest physical resource block PRB corresponding to the lowest subchannel of the target transmission resource is the start location of the SL reference signal;
a highest subchannel of the target transmission resource is an end location of the SL reference signal; and
a highest PRB corresponding to the highest subchannel of the target transmission resource is the end location of the SL reference signal.

8. The method according to claim 1, wherein in a case that the SL reference signal is configured, a PSFCH is enabled.

9. The method according to claim 8, wherein a time domain location of the enabled PSFCH is a candidate resource time domain location of the target transmission resource.

10. The method according to claim 2, wherein in a case that the first resource comprises the resource of the PSSCH and/or the resource of the PSCCH, or the first resource comprises the candidate resource of the PSSCH and/or the candidate resource of the PSCCH, the target transmission resource is determined according to at least one of sensing, the first mapping relationship, and the second mapping relationship.

11. The method according to claim 1, wherein the target transmission resource is determined according to at least one of the following:
a periodicity value of an SL reference signal resource;
a time interval of the SL reference signal resource;
a number of times of transmission of the SL reference signal;
an index of the SL reference signal;
a sensing or measuring window of the SL reference signal;
a frequency domain resource bandwidth of the SL reference signal;
a resource pool identifier;
a repetition factor;
an identifier parameter;
a priority of the SL reference signal;
a cyclic shift; and
transmit power.

12. The method according to claim 11, wherein in a case that the periodicity value of the SL reference signal resource is 0, the SL reference signal resource is determined according to a time domain indication and/or a frequency domain indication, or transmission of the SL reference signal resource is aperiodic transmission.

13. The method according to claim 11, wherein the periodicity value of the SL reference signal resource is determined according to at least one of the following:
the priority of the SL reference signal;
quality of service QoS;
a delay;
a channel busy ratio CBR;
a channel occupancy ratio CR;
reference signal received power RSRP; and
a reference signal strength indicator RSSI.

14. The method according to claim 11, wherein the time interval of the SL reference signal resource meets at least one of the following:
the time interval is an interval from a previously reserved SL reference signal resource; and
the time interval is an interval between a reserved SL reference signal resource and an SL reference signal resource sent for the first time.

15. The method according to claim 11, wherein a parameter of the sensing or measuring window of the SL reference signal comprises at least one of the following:
a length;
a size;
a start location;
an end location;
a periodicity of the window;
an interval of the window;
a priority of the window; and
a priority indication of data.

16. The method according to claim 11, wherein the frequency domain resource bandwidth of the SL reference signal meets at least one of the following:
the frequency domain resource bandwidth is the same as an SL bandwidth part BWP;
the frequency domain resource bandwidth is the same as an SL resource pool bandwidth;
the frequency domain resource bandwidth is within a bandwidth of SL data or an SL PSSCH;
the frequency domain resource bandwidth is the same as the bandwidth of the SL data or the SL PSSCH; and
the frequency domain resource bandwidth is indicated by using a PRB or a subchannel as a granularity.

17. The method according to claim 11, wherein the priority of the SL reference signal meets at least one of the following:
the priority is a value that is predefined in a protocol, configured, or indicated;
the priority is related to a priority of an upper-layer service or a positioning service;
the priority is determined according to a priority of a to-be-transmitted data packet, a priority of an SL process, a priority of a hybrid automatic repeat request HARQ process, or a priority of a MAC protocol data unit PDU; and
the priority is determined according to a priority offset, wherein the priority offset is a predefined, configured, or indicated value.

18. The method according to claim 1, wherein the target transmission resource is determined according to a sensing result, and when a resource determined through the sensing result meets a first condition, the resource determined through the sensing result is excluded, wherein the first condition comprises at least one of the following:
an SL reference signal resource indicated or reserved by SCI;
a resource whose RSRP is greater than or equal to an RSRP threshold;
a reference signal resource whose resource overlapping degree with an occupied reference signal resource in a time domain unit meets a preset condition.

19. The method according to claim 18, wherein the RSRP threshold is determined according to at least one of the following:
the threshold is a value that is predefined in a protocol, configured, or indicated;
the threshold is a value determined according to a priority mapping rule; and
the threshold is a value determined according to a data priority and an RSRP offset.

20. The method according to claim 1, wherein the target transmission resource is determined according to a sensing result, and if a resource determined through the sensing result meets a second condition, the resource determined through the sensing result is selected, wherein the second condition comprises at least one of the following:
a resource whose RSRP is less than or equal to an RSRP threshold;
a resource that is not reserved by DCI or SCI and that is in a time domain unit; and
a resource of a remaining resource element RE, PRB, or subchannel in a time domain unit that a resource reserved by the DCI or the SCI is in.

21. The method according to claim 1, wherein the SL reference signal meets at least one of the following:
an interval between the SL reference signal and an SL reference signal received by the terminal is indicated according to DCI or SCI, predefined in a protocol, or determined through an RRC configuration; and
an interval between the SL reference signal and the SCI received by the terminal is indicated according to the DCI or the SCI, predefined in a protocol, or determined through an RRC configuration.

22. The method according to claim 21, wherein a resource used by the terminal to send the SL reference signal and a resource used by another terminal to receive the SL reference signal have different bandwidths.

23. The method according to claim 11, wherein the target transmission resource is determined according to the sensing or measuring window of the SL reference signal; and
the transmitting, by the terminal, the SL reference signal through the target transmission resource comprises:
sensing or measuring, by the terminal, the SL reference signal in the sensing or measuring window of the SL reference signal.

24. The method according to claim 11, wherein the target transmission resource is determined according to the sensing or measuring window of the SL reference signal, and the reference signal is in a range of the sensing or measuring window of the SL reference signal.

25. The method according to claim 11, wherein the transmit power is determined according to at least one of the following:
a target pathloss;
a power adjustment parameter; and
an L1 RSRP measurement or an L3 RSRP measurement.

26. The method according to claim 25, wherein the target pathloss comprises at least one of the following:
a pathloss between the terminal and a network side device;
a pathloss between the terminal and a receive terminal, wherein the terminal is a transmit terminal;
a maximum value in a plurality of pathlosses between the terminal and a plurality of other terminals, wherein the terminal is connected to the plurality of other terminals;
a minimum value in the plurality of pathlosses between the terminal and the plurality of other terminals;
an average value of the plurality of pathlosses between the terminal and the plurality of other terminals;
a pathloss between the terminal and a terminal farthest from the terminal in the plurality of other terminals;
a pathloss between the terminal and a terminal closest to the terminal in the plurality of other terminals;
a DL pathloss;
an SL pathloss; and
a pathloss determined according to a configured rule.

27. The method according to claim 11, wherein the cyclic shift is determined according to at least one of the following:
determined through random selection;
determined by selecting according to a terminal identifier of the terminal;
determined by selecting according to a source terminal identifier;
determined by selecting according to a destination terminal identifier;
determined by selecting according to a group identifier;
determined by selecting according to a PSCCH cyclic redundancy check CRC; and
determined by selecting according to a resource pool identifier.

28. The method according to claim 4, 5, 18, 20, or 21, wherein the SCI is first stage SCI or second stage SCI.

29. An apparatus for transmitting a reference signal, comprising:
a determining module, configured to determine a target transmission resource for transmitting a sidelink SL reference signal, wherein the SL reference signal comprises a reference signal for positioning; and
a transmission module, configured to transmit the SL reference signal through the target transmission resource.

30. The apparatus according to claim 29, wherein the target transmission resource comprises at least one of the following:
a resource predefined in a protocol;
a resource configured by a network side device;
a resource configured by a terminal or another terminal;
a resource indicated by the network side device;
a resource indicated by the terminal or the another terminal;
a resource determined according to a first mapping relationship between a first resource and a reserved resource;
a resource determined according to a second mapping relationship between the first resource and a candidate resource;
a resource determined according to a rule predefined in the protocol;
a resource determined according to a rule configured by the network side device;
a resource determined according to a rule configured by the terminal or the another terminal; and
a resource determined according to a rule indicated by the network side device, wherein
the first resource comprises at least one of the following:
a resource of a physical sidelink shared channel PSSCH;
a resource of a physical sidelink control channel PSCCH;
a candidate resource of the PSCCH;
a candidate resource of the PSSCH;
a resource of a physical sidelink feedback channel PSFCH;
a candidate resource of the PSFCH;
a resource of a physical sidelink broadcast channel PSBCH;
a resource of a demodulation reference signal DMRS;
a resource of a channel state information reference signal CSI-RS; and
a resource of a phase-tracking reference signal PTRS.

31. The apparatus according to claim 29, wherein the target transmission resource is determined according to at least one of the following:
a periodicity value of an SL reference signal resource;
a time interval of the SL reference signal resource;
a number of times of transmission of the SL reference signal;
an index of the SL reference signal;
a sensing or measuring window of the SL reference signal;
a frequency domain resource bandwidth of the SL reference signal;
a resource pool identifier;
a repetition factor;
an identifier parameter;
a priority of the SL reference signal;
a cyclic shift; and
transmit power.

32. A terminal, comprising a processor, a memory, and a program or instructions stored in the memory and runnable on the processor, the program or the instructions, when executed by the processor, implementing steps of the method for transmitting a reference signal according to any one of claims 1 to 28.

33. A readable storage medium, storing a program or instructions, the program or the instructions, when executed by a processor, implementing steps of the method for transmitting a reference signal according to any one of claims 1 to 28.

34. A chip, comprising a processor and a communication interface, wherein the communication interface is coupled to the processor, and the processor is configured to run a program or instructions, to implement steps of the method for transmitting a reference signal according to any one of claims 1 to 28.

35. A computer program product, the program product, when executed by at least one processor, implementing steps of the method for transmitting a reference signal according to any one of claims 1 to 28.

36. A communication device, configured to implement steps of the method for transmitting a reference signal according to any one of claims 1 to 28.
